# FASCICULE DE BREVET EUROPEEN

(11) **EP 4 156 918 B1**
(45) Date de publication et mention de la délivrance du brevet: **15.07.2026**
(21) Numéro de dépôt: 21729878.5
(22) Date de dépôt: 01.06.2021
(51) Int. Cl.: A01K 15/00, A01K 29/00, A01K 7/00

(54) **PROCÉDÉ DE SURVEILLANCE DE L'ALIMENTATION ET CONSOMMATION EN EAU D'UN ANIMAL**
VERFAHREN UND VORRICHTUNG ZUR ÜBERWACHUNG DER FUTTER- UND WASSEREINNAHME EINES TIERES
METHOD AND DEVICE FOR MONITORING THE FEED AND WATER INTAKE OF AN ANIMAL

(30) Priorité: 01.06.2020 EP 20177674
(43) Date de publication de la demande: 05.04.2023
(73) Titulaire: Ceva Santé Animale, 33500 Libourne (FR)
(72) Inventeur: TIMSIT, Edouard, 33500 LIBOURNE (FR); BÉRIER, Frédéric, 29800 PLOUEDERN (FR); LHARIDON, Devan, 29800 PLOUEDERN (FR)
(74) Mandataire: Plasseraud IP
(86) Numéro de dépôt international: PCT/EP2021/064618
(87) Numéro de publication internationale: WO 2021/245056

(56) Documents cités:
- CA-A1- 3 085 608
- DE-U1- 202018 107 000

## Description

### Domaine technique

La présente invention concerne un procédé de surveillance de l'alimentation et de la consommation en eau d'un animal tel qu'une vache.

Elle concerne encore un dispositif de surveillance de l'alimentation et de la consommation en eau d'un tel animal.

### Technique antérieure

Il est connu que les bovins, notamment les vaches laitières, boivent quotidiennement de grandes quantités d'eau.

Dans une exploitation, la quantité d'eau bue par une vache laitière dépend directement du taux de matière sèche de sa ration alimentaire, de son âge, de la température extérieure et du stade de production de lait.

A chaque prise, l'ingestion en eau par une vache adulte peut ainsi être comprise en dix (10) et vingt (20) litres sachant qu'une vache laitière haute productrice peut boire de cent cinquante litres (150 l) à deux cent cinquante litres (250 l) par jour.

Alors que des vaches laitières peuvent passer de quatre (4) à cinq (5) heures par jour à manger, elles ne passent seulement que vingt (20) à trente (30) minutes par jour à boire.

Pour assurer une bonne hydratation des bovins, ces derniers doivent donc avoir accès à des abreuvoirs en nombre suffisant et avec un débit suffisant pour éviter tout phénomène de compétition susceptible de freiner la consommation de certains animaux, ces abreuvoirs étant nettoyés régulièrement pour fournir une eau de qualité.

Il est également nécessaire que cette eau potable soit régulièrement contrôlée quant à sa qualité bactériologique et fournie à une température adéquate, de préférence comprise entre 5°C et 15°C, été comme hiver.

De préférence, ces abreuvoirs sont maintenus à niveau contant pour permettre aux bovins de mettre leur mufle dans l'eau et d'ingérer ainsi plus rapidement la quantité d'eau requise.

On constate une certaine adaptation de ces animaux s'ils ne boivent pas les quantités d'eau nécessaires à leurs besoins vitaux et métaboliques, sans apparition de signes extérieurs susceptibles d'alerter l'éleveur.

Toutefois, ce manque d'eau conduit à des choix prioritaires au niveau du métabolisme de l'animal allant d'une réduction de la production de lait ou de viande à une fragilisation de l'animal aux maladies.

Aujourd'hui, pour s'assurer d'une hydratation convenable de ses bovins, un éleveur doit surveiller visuellement et de manière individuelle chacun d'entre eux

Il lui est également possible de contrôler certains indicateurs d'hydratation tels que l'élasticité de la peau (test du pli de peau), l'enfoncement du globe oculaire ou encore de l'humidité des muqueuses de l'animal.

Toutefois, une telle surveillance est difficilement envisageable dans un élevage avec un nombre important de bovins.

Les mêmes considérations s'appliquent pour l'alimentation d'un bovin.

Il est ainsi connu qu'une vache laitière a un besoin quotidien d'énergie qui dépend de sa production laitière, de son poids, de son statut d'embonpoint, de sa taille, de son stade de lactation et enfin de son âge (primipare vs multipare). Une vache laitière peut ainsi avoir une consommation en matière sèche qui varie entre quinze (15) et trente (30) kg par jour avec une valeur moyenne se situant autour de vingt-cinq (25) Kg par jour.

L'éleveur doit là encore veiller à ce que chaque bovin reçoive une alimentation suffisante pour couvrir ses besoins énergétiques, ce qu'il ne peut faire visuellement lorsque son élevage compte un nombre important de bovins.

On connaît des dispositifs de l'art antérieur permettant de contrôler l'alimentation d'une vache, par exemple, en détectant les mouvements de la mâchoire inférieure de l'animal liés à la rumination ou encore les bruits causés par la mastication de nourriture.
La détection des bruits liés à la déglutition de l'eau a également été proposée pour surveiller la consommation en eau d'une vache.

Ces dispositifs portatifs de l'état de l'art sont particulièrement complexes, lourds et représentent de fait une gêne certaine pour l'animal, affectant de manière sensible son bien-être.

On connaît encore des systèmes de pesée individuelle d'un animal visant à déterminer la quantité de nourriture ingérée. Toutefois, bien que très précis, ces systèmes de pesée nécessitent des installations complexes et coûteuses.

Il existe donc un besoin pressant pour une méthode et un dispositif de surveillance de l'alimentation et de la consommation en eau d'un bovin, dont la conception originale permette de surmonter les inconvénients de l'art antérieur exposés ci-dessus.

On connait par ailleurs un anneau nasal équipé d'un capteur d'humidité comme divulgué dans le document CA3085608 A1.

### Objet de l'invention

La présente invention vise à pallier les inconvénients de l'art antérieur en proposant un procédé de surveillance, simple dans sa conception et dans son mode opératoire, permettant de déterminer de manière fiable l'alimentation ou la consommation en eau, par un bovin ou une pluralité de bovins.

Un autre objet de la présente invention est un tel procédé pouvant être aisément mis en œuvre dans une exploitation pour surveiller un élevage de bovins.

Encore un objet de la présente invention est un tel procédé réduisant au minimum toute gêne pour l'animal ou encore mieux n'entravant pas sa liberté de mouvement.

La présente invention vise également un dispositif de surveillance tel qu'un anneau nasal, pour la mise en œuvre d'un tel procédé de surveillance, n'altérant pas le bien-être de l'animal.

### Exposé de l'invention

A cet effet, l'invention concerne un procédé de surveillance de l'alimentation et de la consommation en eau d'un bovin tel qu'une vache tel que défini dans la revendication 1.
Selon l'invention, au moyen d'au moins un capteur transporté par ledit bovin, il est possible de détecter la présence d'eau et/ou de nourriture dans une zone située au niveau du museau de cet animal et extérieure au corps de cet animal, pour identifier une prise de nourriture ou d'eau par ce bovin.

Cette zone peut ainsi être placée à proximité immédiate du museau du bovin ou encore entourer une partie au moins du museau du bovin. A titre purement illustratif, cette zone peut s'étendre de zéro (0) cm à trente (30) cm autour d'une partie au moins du museau du bovin. Par exemple, cette zone d'espace peut être située à proximité immédiate de l'extrémité du museau, ou mufle, de ce bovin.
De manière avantageuse, cette zone peut encore être située « juste au niveau de », « à ras de » ou encore « très près » du museau de l'animal. Tel est le cas lorsque l'animal a une partie de son museau en contact avec cette eau ou nourriture.

Bien entendu, la présence d'eau ou de nourriture ayant été détectée, s'il n'est pas possible de conclure sur une prise effective de nourriture ou d'eau par ce bovin à partir de cette seule détection, par exemple parce que cette eau ou cette nourriture n'est pas située au ras du museau de l'animal, il est possible de combiner des informations provenant de capteurs différents, portés ou non par cet animal, pour identifier, de manière certaine, cette prise d'eau ou de nourriture.

Ce procédé particulièrement simple permet de détecter de manière fiable des activités consistant en la prise de nourriture ou d'eau par un bovin et d'assurer ainsi un suivi dans le temps de ces activités pour le contrôle de l'état de santé de cet animal.

Ce procédé peut notamment être utilisé pour détecter des changements ou des troubles du comportement alimentaire et de l'abreuvement chez un bovin. La constatation de tels changements ou troubles peut être un indicateur pertinent d'un changement de statut physiologique (e.g. œstrus, vêlage), d'une maladie et/ou d'une réduction du bien-être de l'animal. De plus, une baisse d'ingestion alimentaire ou d'eau peut être associée à une diminution de la production (laitière ou viandeuse).

Notons que le présent procédé est particulièrement efficace pour surveiller la consommation d'aliments qu'il s'agisse de matière sèche (capteur radar) ou d'aliments présentant généralement un taux d'humidité élevé (capteur radar et/ou capteur de détection d'eau). On observe également que lorsqu'un bovin se nourrit, son mufle et ses naseaux sont directement en contact avec l'aliment à consommer de sorte qu'un anneau nasal équipé de capteurs électroniques et porté par cet animal peut assurer la détection de nourriture ou d'eau.

Selon un mode de réalisation particulier de ce procédé de surveillance de l'alimentation et de la consommation en eau d'un bovin. ledit au moins un capteur comprenant un capteur radar, on réalise les étapes suivantes :
- émettre un signal de radar au moins dans ladite zone,
- recevoir au moins une réflexion du signal de radar provenant d'un objet situé dans ladite zone pour obtenir des données dudit au moins un objet,
   et
- traiter lesdites données pour déterminer la présence d'eau ou de nourriture dans ladite zone.
Un tel capteur radar permet avantageusement de déterminer la composition de chaque objet située dans cette zone et ainsi d'identifier par exemple le type de nourriture.

Selon un autre mode de réalisation particulier de ce procédé de surveillance de l'alimentation et de la consommation en eau d'un bovin. une antenne d'émission de ce capteur radar configurée pour émettre un signal de radar à bande ultralarge émet un signal de radar dans ladite zone.

Selon encore un autre mode de réalisation particulier de ce procédé de surveillance de l'alimentation et de la consommation en eau d'un bovin. ledit signal de radar est émis sous forme d'impulsions cohérentes.

Selon ce procédé de surveillance de l'alimentation et de la consommation en eau d'un bovin. ledit bovin porte un anneau nasal comportant au moins un capteur de détection d'eau placé dans la partie de cet anneau située hors des naseaux de l'animal, permettant de détecter avec ledit au moins un capteur, l'immersion de ladite partie d'anneau dans l'eau ou la présence d'eau au-delà d'une valeur seuil au niveau de l'extrémité du museau de cet animal pour identifier une prise de nourriture ou d'eau de ce bovin.
De préférence, cet anneau nasal porte le capteur de radar et ledit au moins un capteur de détection d'eau, lesquels sont distincts et espacés les uns des autres.

Selon encore un autre mode de réalisation particulier de ce procédé de surveillance de l'alimentation et de la consommation en eau d'un bovin, on réalise une ou plusieurs mesures choisies dans le groupe comprenant une mesure de la pression ambiante s'appliquant sur ladite partie de l'anneau, une mesure du niveau d'humidité à proximité de ladite partie de l'anneau, une mesure de conductivité électrique pour détecter une variation de la conductivité entre deux électrodes espacées l'une de l'autre, une mesure de capacité de l'espace séparant deux électrodes pour détecter une variation de la capacité de cet espace liée à la présence de l'eau, et une mesure de détection optique de l'eau.

Cette ou ces mesures peuvent ainsi comprendre :
- une mesure au moyen d'une jauge de pression mesurant la pression ambiante s'appliquant sur la partie de l'anneau. A titre d'exemple, lorsque le bovin consomme de l'eau dans un abreuvoir à niveau constant, la partie de cet anneau se trouve alors immergée avec la partie correspondante de l'extrémité du museau de l'animal, l'eau exerçant une pression sur cette partie d'anneau peut être détectée,
- une mesure au moyen d'un capteur d'humidité pour mesurer le niveau d'humidité à proximité immédiate de cette partie de l'anneau,
- une mesure de conductivité électrique pour détecter une variation de la conductivité électrique entre deux électrodes espacées l'une de l'autre, cette variation résultant d'un comblement de l'espace séparant ces deux électrodes par l'eau provenant d'un abreuvoir ou d'un aliment riche en eau,
- une mesure de capacité de l'espace séparant deux électrodes pour détecter une variation de la capacité de cet espace liée à la présence de l'eau, et
- une mesure de détection optique de l'eau. Une telle mesure peut être réalisée selon différentes méthodes. A titre purement illustratif, elle peut être basée sur une réflexion interne totale de la lumière. Des sources de lumière telles que des diodes électroluminescente (LEDs) et un photodétecteur sont placés à l'intérieur d'un logement dans la partie d'anneau. En présence d'eau, une partie de la lumière est réfractée par l'eau et n'est plus reflétée par la paroi de l'anneau. La quantité de la lumière reçue par le photodétecteur est réduite et la présence d'eau est ainsi détectée.

Alternativement, il peut s'agir de détecter l'interruption d'un faisceau lumineux traversant une portion transparente de la partie de l'anneau par de l'eau environnant cette partie d'anneau.

Cette ou chacune de ces mesures sont comparées avantageusement à une valeur seuil préalablement définie et la mesure correspondante est retenue uniquement lorsqu'elle est supérieure à cette valeur seuil pour éviter notamment la prise en compte de fausses mesures telles que celles résultant du dépôt sur l'anneau de fines gouttelettes d'eau liées à une brume.
Ainsi, cette valeur seuil est définie pour éliminer des mesures liées à l'état physiologique naturel de l'animal tel que l'humidité naturelle de l'extrémité du museau de l'animal et/ou d'éventuelles fausses mesures liées aux conditions atmosphériques environnant l'animal telles que la pluie ou du brouillard.

Selon un autre mode de réalisation de ce procédé de surveillance de l'alimentation et de la consommation en eau d'un bovin, on détecte également la localisation de l'animal à proximité d'un abreuvoir et/ou d'une mangeoire.
Il est ainsi possible de déterminer la position de l'animal par rapport à un point d'approvisionnement en eau ou en nourriture tel qu'en fourrage. En fonction de la méthode de détection utilisée ce positionnement de l'animal peut être relatif ou absolu.
Par exemple, il est possible de mettre en œuvre une ou plusieurs balises permettant de détecter la position de l'animal à proximité de cette ou d'au moins une de ces balises.
De manière avantageuse, on réalise une mesure de localisation de l'animal par une communication sans fil avec un lecteur de communication Bluetooth^{®}, infrarouge ou en champ proche (NFC). L'anneau nasal comporte alors une étiquette NFC ou un badge RFID.
Ce lecteur de communication est directement placé ou implanté dans l'abreuvoir ou la mangeoire.
Alternativement, ou en supplément, l'anneau peut être équipé d'un récepteur de système de localisation mondial (GPS). Il peut encore s'agir d'un capteur optique de proximité de l'animal.
De préférence, on entend par « proximité », une localisation de l'animal à une distance inférieure à une distance seuil prédéterminée de l'objet considéré tel qu'un abreuvoir ou une mangeoire. Il peut dès lors être considéré que l'animal est au point d'abreuvement et est donc susceptible de boire, ou est au point d'alimentation et est donc susceptible de se nourrir.

Selon encore un autre mode de réalisation de ce procédé de surveillance de l'alimentation et de la consommation en eau d'un bovin, on détecte un mouvement de la tête de l'animal, notamment un abaissement de la tête de ce dernier.

Il peut ainsi être envisagé de combiner des informations pour garantir de manière absolue la prise effective de nourriture ou d'eau par un animal. Un tel mode de réalisation est particulièrement utile lorsque la fiabilité d'une des mesures pourrait être affectée par exemple par la présence de poussières importantes dans l'air ou des conditions environnementales extrêmes telles qu'une forte pluie ou encore en cas d'accumulation progressive d'eau liée à un épais brouillard.
A titre purement illustratif, des informations liées à la présence d'un animal à proximité d'un abreuvoir ou d'une mangeoire pourraient être couplées avec des mesures dudit au moins un capteur de détection d'eau ou dudit capteur radar.

Selon encore un autre mode de réalisation de ce procédé de surveillance de l'alimentation et de la consommation en eau d'un bovin, on combine les informations liées à la présence de l'animal à proximité d'un abreuvoir et/ou d'une mangeoire ainsi qu'un abaissement de la tête de l'animal pour déclencher la ou les mesures avec ledit au moins un capteur de détection d'eau ou dudit capteur radar.
On s'assure ainsi de la pertinence des mesures et d'une optimisation de la durée de la batterie embarquée dans l'anneau nasal.
Alternativement encore, les mesures pourraient être réalisées en continue lorsque l'animal est détecté comme étant présent à proximité d'un abreuvoir ou d'une mangeoire, mais seules les mesures obtenues lors de la détection que l'animal baisse sa tête seraient pris en considération.

Selon encore un autre mode de réalisation de ce procédé de surveillance de l'alimentation et de la consommation en eau d'un bovin, ledit capteur radar et/ou ledit au moins un capteur de détection d'eau présentant un mode de veille de consommation de faible énergie, chaque capteur est placé dans ce mode lorsqu'il apparaît que l'animal est au repos ou n'est pas localisé à proximité d'un abreuvoir et/ou d'une mangeoire ou encore que la tête de cet animal ne soit pas baissée vers le sol.
De manière avantageuse, un tel mode de réalisation permet de minimiser la consommation en énergie et d'optimiser la durée d'utilisation de la batterie embarquée dans le dispositif de surveillance tel qu'un anneau nasal.
Bien entendu, le capteur de mouvement de la tête de l'animal tel qu'un accéléromètre et/ou le dispositif de localisation, restent opérationnels, ou encore actifs, lorsque ledit au moins un capteur de détection d'eau et/ou ledit capteur radar sont dans leur mode de veille.

Selon encore un autre mode de réalisation de ce procédé de surveillance de l'alimentation et de la consommation en eau d'un bovin, on détecte les mouvements du museau de l'animal pour identifier une mastication d'aliments par ce dernier.
Un bovin présente un mouvement particulier de ses mâchoires lorsqu'il s'alimente, lequel peut être détecté au moyen d'un accéléromètre (3 axes). Ainsi, les mouvements de mâchoire liés à la mastication ou à la déglutition sont avantageusement détectés pour déterminer des informations sur l'activité de l'animal quant à son alimentation ou sa consommation d'eau.

Selon encore un autre mode de réalisation de ce procédé de surveillance de l'alimentation et de la consommation en eau d'un bovin, on acquiert les mesures fournies par ledit capteur radar et/ou ledit au moins un capteur de détection d'eau dans le temps pour déterminer une durée de consommation en eau ou d'alimentation de cet animal.

Selon encore un autre mode de réalisation de ce procédé de surveillance de l'alimentation et de la consommation en eau d'un bovin, lesdites mesures sont traitées par une unité centrale telle qu'un microprocesseur, portée par l'animal ou sont envoyées par un protocole de communication sans fil vers une unité centrale distante.
Dans ce dernier cas, l'anneau nasal comporte un émetteur tel qu'une antenne, pour transmettre les données mesurées à l'unité centrale distante.

Selon encore un autre mode de réalisation de ce procédé de surveillance de l'alimentation et de la consommation en eau d'un bovin, on délivre également avec ledit anneau nasal des composés actifs tels que des médicaments, des vitamines, des hormones, ...
A titre purement illustratif, le composé actif peut être de la progestérone pour une vache laitière ou encore d'autres hormones telles que GnRH ou PGF2alfa, de la mélatonine et des parasiticides.

Selon encore un autre mode de réalisation de ce procédé de surveillance de l'alimentation et de la consommation en eau d'un bovin, préalablement à la ou aux mesures, ledit animal a été identifié de manière unique.

Selon encore un autre mode de réalisation de ce procédé de surveillance de l'alimentation et de la consommation en eau d'un bovin, on estime la quantité d'eau bue, ou la quantité de nourriture ingérée, par le bovin à partir de la durée pendant laquelle l'animal, détecté comme étant placé à proximité d'un abreuvoir, ou respectivement d'une mangeoire, a conservé sa tête baissée et/ou pendant laquelle la présence d'eau ou de nourriture a été détectée et/ou pendant laquelle la déglutition ou la mastication de l'animal a été identifiée grâce à la détection du mouvement des mâchoires de l'animal.
De manière avantageuse, pour réaliser cette estimation, on peut se baser sur une quantité d'eau bue de référence, ou respectivement d'une quantité de nourriture ingérée de référence, pendant une durée T par cet animal en fonction notamment de l'âge et du poids du bovin considéré.
De préférence, à partir de ces données, on estime une quantité journalière d'eau bue ou de nourriture ingérée par le bovin.
Cette valeur étant inférieure à une valeur seuil prédéfinie pour le bovin considéré, en tenant compte de son âge et de son poids, une alerte est déclenchée.
Il pourrait également être utile de relever à distance le volume d'eau délivré à l'abreuvoir durant le temps de présence de l'animal, tel que mesuré par un compteur d'eau équipant cet abreuvoir, afin d'ajuster cette quantité d'eau bue par l'animal.

La détection du mouvement des mâchoire de l'animal peut notamment être assurée au moyen d'un accéléromètre (3 axes) lequel permet de détecter l'activité et le mouvement de la tête de l'animal.

La présente invention concerne également un dispositif de surveillance de l'alimentation et de la consommation en eau d'un bovin tel qu'une vache, selon la revendication 14.
Selon l'invention, ce dispositif de surveillance est portatif et comporte :
- un capteur radar comprenant au moins :
- une antenne d'émission disposée en une première position et configurée pour émettre un signal radar dans une zone externe au corps de l'animal,
- une antenne de réception disposée en une seconde position distincte et espacée de la première position, ladite antenne de réception étant configurée pour recevoir les signaux réfléchis par un ou plusieurs objets placés dans la zone,
   et
- un capteur de détection d'eau agencé pour être placé à l'extérieur du corps de l'animal lorsque ce dernier porte ledit dispositif de surveillance, ce capteur de détection d'eau étant configuré pour détecter l'immersion au moins partielle du dispositif de surveillance dans l'eau ou la présence d'eau au-delà d'une valeur seuil à l'extérieur du corps de cet animal et au niveau de l'extrémité de son museau, et
- une unité de traitement pour identifier à partir des mesures prises par ledit capteur radar et/ou ledit au moins un capteur de détection d'eau, une prise de nourriture ou d'eau par ce bovin.

De préférence, cette zone est placée à proximité immédiate du museau du bovin ou encore entourer une partie au moins du museau du bovin. A titre purement illustratif, cette zone peut s'étendre de zéro (0) cm à trente (30) cm autour d'une partie au moins du museau du bovin.
Par exemple, cette zone d'espace peut être située à proximité immédiate de l'extrémité du museau, ou mufle, de ce bovin.
De manière avantageuse, cette zone peut encore être située « juste au niveau de », « à ras de » ou encore « très près » du museau de l'animal. Tel est le cas lorsque l'animal a une partie de son museau en contact avec cette eau ou nourriture.

Selon l'invention, ledit capteur radar est placé dans un anneau nasal, ce qui rend le procédé de surveillance d'un bovin particulièrement simple et efficace.
L'animal est entièrement libre de ses mouvements et n'est pas gêné par des appareils de l'art antérieur portatifs, plus ou moins volumineux, venant contraindre sa tête ou son ventre.

Selon un autre mode de réalisation de ce dispositif de surveillance, ladite antenne d'émission est configurée pour émettre un signal de radar à bande ultralarge.
De préférence, le signal de radar est émis sous forme d'impulsions cohérentes.
A titre d'exemple, la portée exploitable du capteur de radar est comprise entre 0 et 4 m. Une précision de 1mm jusqu'à 2m de distance peut être obtenue.
L'orientation est 80° H-plane et 40° E-plane.

Selon l'invention, ledit au moins un capteur de détection d'eau est placé dans la partie d'un anneau nasal destinée à être située hors des naseaux de l'animal lorsque ce dernier porte cet anneau nasal, ledit au moins un capteur de détection d'eau étant configuré pour détecter l'immersion de ladite partie d'anneau dans l'eau ou la présence d'eau au-delà d'une valeur seuil à l'extérieur du corps de cet animal et au niveau de l'extrémité de son museau pour identifier une prise de nourriture ou d'eau de ce bovin.

De manière avantageuse, ce ou ces capteurs sont choisis dans le groupe comprenant une jauge de pression, un capteur d'humidité, une sonde de mesure de conductivité électrique pour détecter une variation de la conductivité entre deux électrodes espacées l'une de l'autre, une sonde de mesure de capacité de l'espace séparant deux électrodes pour détecter une variation de la capacité de cet espace et un capteur optique pour détecter la présence d'eau sur ou dans ladite partie d'anneau.
De préférence, cet anneau peut comporter plusieurs de ces éléments, lesquels sont par exemple placés dans la partie centrale du corps de l'anneau nasal.

Ce capteur optique peut être configuré pour détecter la réflexion interne totale de la lumière à l'intérieur d'une portion de l'anneau nasal ou ce capteur optique peut être configuré pour mesurer la lumière réfractée par de l'eau environnant ladite partie d'anneau.

Selon encore un autre mode de réalisation de ce dispositif de surveillance, il comporte également un accéléromètre et/ou un gyroscope et/ou un dispositif de localisation de ce dispositif de surveillance à proximité d'un abreuvoir ou d'une mangeoire.

A titre d'exemple, ce dispositif de localisation est configuré pour réaliser une communication sans fil avec un lecteur de communication Bluetooth^{®}, infrarouge ou en champ proche (NFC).

Selon encore un autre mode de réalisation de ce dispositif de surveillance, il est configuré pour délivrer des composés actifs tels que des médicaments, des vitamines, des hormones ....

De manière plus générale, la présente divulgation concerne également un procédé non revendiqué de surveillance de l'alimentation et de la consommation en eau d'un bovin tel qu'une vache, dans lequel une prise de nourriture ou d'eau par ce bovin est identifiée au moyen d'un capteur radar porté par ledit bovin.
Un tel capteur radar permet non seulement de détecter de la nourriture ou de l'eau dans une zone dans lequel il émet un signal de radar, mais il assure également la détection de leur composition. Il permet également la détection d'aliment qui ne contiendrait pas un taux d'humidité suffisant pour être détecté par un capteur de détection d'eau.

Selon un mode de réalisation de ce procédé de surveillance de l'alimentation et de la consommation en eau d'un bovin, on réalise les étapes suivantes :
- émettre un signal de radar dans une zone,
- recevoir au moins une réflexion du signal de radar provenant d'un objet situé dans ladite zone pour obtenir des données dudit au moins un objet, et
- traiter lesdites données pour déterminer la présence d'eau ou de nourriture dans ladite zone.
De préférence, cette zone est externe au corps de l'animal.

Selon un autre mode de réalisation de ce procédé de surveillance de l'alimentation et de la consommation en eau d'un bovin, une antenne d'émission configurée pour émettre un signal de radar à bande ultralarge émet un signal de radar dans une zone placée en avant de la tête du bovin.

Selon encore un autre mode de réalisation de ce procédé de surveillance de l'alimentation et de la consommation en eau d'un bovin. ledit signal de radar est émis sous forme d'impulsions cohérentes.

Selon encore un autre mode de réalisation de ce procédé de surveillance de l'alimentation et de la consommation en eau d'un bovin. ledit capteur radar est placé dans un anneau nasal, un collier ou une étiquette auriculaire.

Est également divulgué ici, quoique non revendiqué, un dispositif de surveillance de surveillance de l'alimentation et de la consommation en eau d'un bovin comprenant un capteur de radar et une unité de traitement pour identifier à partir des mesures prises par ce capteur de radar, une consommation de nourriture ou d'eau par ce bovin.

Selon un mode de réalisation de ce dispositif de surveillance de l'alimentation et la consommation en eau d'un bovin, ce capteur radar comporte une antenne d'émission disposée en une première position et configurée pour émettre un signal radar dans une zone externe au corps de l'animal et une antenne de réception disposée en une seconde position distincte et espacée de ladite première position, ladite antenne de réception étant configurée pour recevoir les signaux réfléchis par un ou plusieurs objets placés dans cette zone.

Selon un autre mode de réalisation de ce dispositif de surveillance de l'alimentation et la consommation en eau d'un bovin, ce capteur de radar est un capteur à bande ultralarge.

Selon encore un autre mode de réalisation de ce dispositif de surveillance de l'alimentation et la consommation en eau d'un bovin, il comporte un anneau nasal, un collier ou une étiquette auriculaire comportant un logement pour recevoir ledit capteur radar.

Selon encore un autre mode de réalisation de ce dispositif de surveillance de l'alimentation et la consommation en eau d'un bovin, il comporte un ou plusieurs capteurs de détection de présence d'eau choisis dans le groupe comprenant une jauge de pression, un capteur d'humidité, une sonde de mesure de conductivité électrique pour détecter une variation de la conductivité entre deux électrodes espacées l'une de l'autre, une sonde de mesure de capacité de l'espace séparant deux électrodes pour détecter une variation de la capacité de cet espace et un capteur optique pour détecter la présence d'eau sur ou dans ledit dispositif.

Selon encore un autre mode de réalisation de ce dispositif de surveillance de l'alimentation et la consommation en eau d'un bovin, il comporte également un accéléromètre et/ou gyroscope et/ou un dispositif de localisation de ce dispositif de surveillance à proximité d'un abreuvoir ou d'une mangeoire.

### Brève description des dessins

D'autres avantages, buts et caractéristiques particulières de la présente invention ressortiront de la description qui va suivre, faite, dans un but explicatif et nullement limitatif, en regard des dessins annexés, dans lesquels:
**Fig. 1**

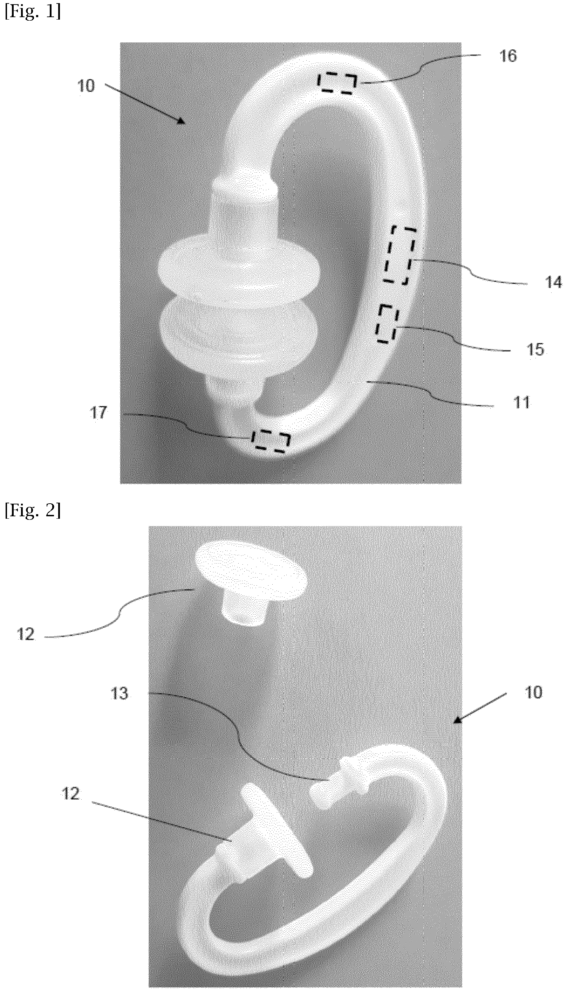

   [Fig. 1] est une vue en perspective d'un anneau nasal pour surveillance de l'alimentation et de la consommation en eau d'un bovin selon un mode de réalisation particulier de la présente invention ;
**Fig. 2**
   [Fig. 2] est une vue partiellement éclatée de l'anneau nasal de la Fig. 1 ;

### Description d'un mode de réalisation

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

Tout d'abord, on note que les figures ne sont pas à l'échelle.

Les Figures 1 et 2 illustrent de manière schématique un anneau nasal 10 pour surveillance de l'alimentation et de la consommation en eau d'un bovin tel qu'une vache selon un mode de réalisation particulier de la présente invention.

Cet anneau nasal 10 comporte un corps principal 11 pouvant prendre la forme d'un segment d'ellipse ou d'une portion rectangulaire. Il est de préférence réalisé dans une matière plastique telle qu'un polymère.

Ce corps reçoit à ses extrémités des patins 12 destinés à venir prendre appui chacun contre une paroi nasale du bovin. Chaque patin 12 est avantageusement monté sur une rotule 13 pour être mobile en pivotement et s'adapter à la physionomie de l'animal.

La conception du corps de l'anneau nasal 10 permet d'enserrer ces parois nasales et d'appliquer une légère pression au moyen de ces patins 12 pour assurer le maintien en position de l'anneau.

Bien entendu, cet anneau nasal 10 pourrait présenter un autre type de fixation tel qu'un crochet destiné à traverser la paroi nasale de l'animal.

La partie centrale du corps de l'anneau destinée à être située hors des naseaux de l'animal, lorsque ce dernier porte l'anneau nasal, est creuse pour loger plusieurs capteurs.

Cette partie centrale reçoit ainsi un capteur d'humidité 14 débouchant sur l'extérieur et permettant de déterminer le niveau d'humidité environnant immédiatement cette partie de l'anneau.

Elle comporte en plus une sonde de mesure de conductivité électrique 15 pour détecter une variation de la conductivité entre deux électrodes espacées l'une de l'autre. Cette variation résulte de la présence de l'eau venant combler l'espace séparant les deux électrodes.

La combinaison des informations fournies par ces deux capteurs 14, 15 permet de détecter l'immersion de cette partie d'anneau nasal 10 dans l'eau ou la présence d'eau au-delà d'une valeur seuil à l'extérieur du museau et au niveau de l'extrémité du museau, ou mufle, de cet animal pour identifier une prise de nourriture ou d'eau.

Un capteur de mouvement tel qu'un accéléromètre 16 est aussi placé à l'intérieur du corps principal 11 de l'anneau pour permettre d'obtenir des données de mouvement de la tête de l'animal. Il est ainsi possible de déterminer lorsque l'animal baisse sa tête pour s'abreuver ou manger.

Le corps principal 11 de l'anneau est également pourvu d'une étiquette NFC 17 pour réaliser des communications sans fil avec un lecteur de communication en champ proche (NFC) permettant ainsi de localiser l'animal par rapport à un abreuvoir, ou une mangeoire, équipés de tels lecteurs.

De préférence, l'anneau comporte encore un capteur GPS 18 permettant d'identifier le comportement de l'animal, notamment si ce dernier est immobile. En combinant cette information avec celle provenant de l'accéléromètre, il est alors possible d'en déduire si l'animal est au repos, par exemple, s'il dort.

Cet anneau nasal est également configuré pour délivrer des composés actifs tels que des médicaments, des vitamines, ...

## Revendications

1. Procédé de surveillance de l'alimentation et de la consommation en eau d'un bovin tel qu'une vache, mettant en œuvre un anneau nasal (10) transporté par ledit bovin, ledit anneau nasal (10) comportant au moins deux capteurs (14, 15), afin de détecter la présence d'eau et/ou de nourriture dans une zone située au niveau du museau de cet animal et extérieure au corps de cet animal, pour identifier une prise de nourriture ou d'eau par ce bovin, lesdits au moins deux capteurs comprenant un capteur radar,
- procédé dans lequel on réalise les étapes suivantes :
- émettre un signal de radar au moins dans ladite zone,
- recevoir au moins une réflexion du signal de radar provenant d'un objet situé dans ladite zone pour obtenir des données dudit au moins un objet, et
- traiter lesdites données pour déterminer la présence d'eau ou de nourriture dans ladite zone,
- procédé dans lequel ledit anneau nasal (10) comporte un capteur de détection d'eau (14, 15) placé dans la partie de cet anneau située hors des naseaux de l'animal, pour détecter avec ledit capteur, l'immersion de ladite partie d'anneau dans l'eau ou la présence d'eau au-delà d'une valeur seuil au niveau de l'extrémité du museau de cet animal pour identifier une prise de nourriture ou d'eau de ce bovin.

2. Procédé selon la revendication 1, **caractérisé en ce que** qu'une antenne d'émission configurée pour émettre un signal de radar à bande ultralarge émet un signal de radar dans ladite zone.

3. Procédé selon la revendication 2, **caractérisé en ce que** ledit signal de radar est émis sous forme d'impulsions cohérentes.

4. Procédé selon la revendication 1, **caractérisé en ce qu'**on réalise une ou plusieurs mesures choisies dans le groupe comprenant une mesure de la pression ambiante s'appliquant sur ladite partie de l'anneau, une mesure du niveau d'humidité à proximité de ladite partie de l'anneau, une mesure de conductivité électrique pour détecter une variation de la conductivité entre deux électrodes espacées l'une de l'autre, une mesure de capacité de l'espace séparant deux électrodes pour détecter une variation de la capacité de cet espace liée à la présence de l'eau, et une mesure de détection optique de l'eau.

5. Procédé selon la revendication 4, **caractérisé en ce que** ladite valeur seuil est définie pour éliminer des mesures liées à l'état physiologique naturel de l'animal tel que l'humidité naturelle de l'extrémité du museau de l'animal et/ou d'éventuelles fausses mesures liées aux conditions atmosphériques environnant l'animal telles que la pluie ou du brouillard.

6. Procédé selon l'une quelconque des revendications 1 à 5, **caractérisé en ce qu'**on détecte également la localisation de l'animal à proximité d'un abreuvoir et/ou d'une mangeoire.

7. Procédé selon l'une quelconque des revendications 1 à 6, **caractérisé en ce qu'**on détecte un mouvement de la tête de l'animal.

8. Procédé selon les revendications 6 et 7, **caractérisé en ce qu'**on associe les informations liées à la présence de l'animal à proximité d'un abreuvoir et/ou d'une mangeoire ainsi qu'un abaissement de la tête de l'animal pour déclencher la ou les mesures avec ledit capteur radar et/ou ledit au moins un capteur de détection d'eau (14, 15).

9. Procédé selon l'une quelconque des revendications 1 à 5 et 6 et/ou 7, **caractérisé en ce que** ledit capteur radar et/ou ledit au moins un capteur de détection d'eau (14, 15) présentant un mode de veille de consommation de faible énergie, chaque capteur est placé dans ce mode lorsqu'il apparaît que l'animal est au repos ou n'est pas localisé à proximité d'un abreuvoir et/ou d'une mangeoire ou encore que la tête de cet animal ne soit pas baissée vers le sol.

10. Procédé selon l'une quelconque des revendications précédentes, **caractérisé en ce qu'**on détecte les mouvements du museau de l'animal pour identifier une mastication d'aliments par ce dernier.

11. Procédé selon l'une quelconque des revendications précédentes, **caractérisé en ce qu'**on acquiert les mesures fournies par ledit capteur radar et/ou ledit au moins un capteur de détection d'eau (14, 15) dans le temps pour déterminer une durée de consommation en eau ou d'alimentation de cet animal.

12. Procédé selon l'une quelconque des revendications précédentes, **caractérisé en ce que** lesdites mesures sont traitées par une unité centrale telle qu'un microprocesseur, portée par l'animal ou sont envoyées par un protocole de communication sans fil vers une unité centrale distante.

13. Procédé selon l'une quelconque des revendications précédentes, **caractérisé en ce qu'**on délivre également avec ledit anneau nasal (10) des composés actifs tels que des médicaments, des vitamines.

14. Dispositif de surveillance de l'alimentation et de la consommation en eau d'un bovin tel qu'une vache, apte à être transporté par un bovin et comprenant un anneau nasal (10), qui comporte :
- un capteur radar comprenant au moins :
- une antenne d'émission disposée en une première position et configurée pour émettre un signal radar dans une zone externe au corps de l'animal,
- une antenne de réception disposée en une seconde position distincte et espacée de la première position, ladite antenne de réception étant configurée pour recevoir les signaux réfléchis par un ou plusieurs objets placés dans la zone, et
- un capteur de détection d'eau (14, 15) agencé dans la partie de cet anneau située hors des naseaux de l'animal lorsque ce dernier porte ledit dispositif de surveillance, ce capteur de détection d'eau (14, 15) étant configuré pour détecter l'immersion de ladite partie d'anneau dans l'eau ou la présence d'eau au-delà d'une valeur seuil au niveau de l'extrémité du museau de cet animal pour identifier une prise de nourriture ou d'eau de ce bovin, et
- une unité de traitement pour identifier à partir des mesures prises par ledit capteur radar et/ou ledit au moins un capteur de détection d'eau (14, 15), une prise de nourriture ou d'eau par ce bovin.

15. Dispositif de surveillance selon la revendication 14, **caractérisé en ce que** ladite antenne d'émission est configurée pour émettre un signal de radar à bande ultralarge.

16. Dispositif de surveillance selon la revendication 14,
**caractérisé en ce que** ledit anneau nasal (10) est configuré pour délivrer des composés actifs tels que des médicaments, des vitamines, des hormones.

17. Dispositif selon l'une quelconque des revendications 14 à 16,
**caractérisé en ce que** le ou les capteurs de détection de présence d'eau sont choisis dans le groupe comprenant une jauge de pression, un capteur d'humidité, une sonde de mesure de conductivité électrique pour détecter une variation de la conductivité entre deux électrodes espacées l'une de l'autre, une sonde de mesure de capacité de l'espace séparant deux électrodes pour détecter une variation de la capacité de cet espace et un capteur optique pour détecter la présence d'eau sur ou dans ladite partie d'anneau.

18. Dispositif selon l'une quelconque des revendications précédentes, **caractérisé en ce qu'**il comporte également un accéléromètre (16) et/ou gyroscope et/ou un dispositif de localisation (17) de ce dispositif de surveillance à proximité d'un abreuvoir ou d'une mangeoire.

## Patentansprüche

1. Verfahren für die Überwachung der Nahrungs- und Wasseraufnahme eines Rindes, wie einer Kuh, unter Verwendung eines von dem Rind getragenen Nasenrings (10), wobei der Nasenring (10) mindestens zwei Sensoren (14, 15) umfasst, um das Vorhandensein von Wasser und/oder Nahrung in einem Bereich zu detektieren, der sich auf der Höhe des Mauls dieses Tieres und außerhalb des Körpers dieses Tieres befindet, um eine Nahrungs- oder Wasseraufnahme durch dieses Rind zu identifizieren, wobei die mindestens zwei Sensoren einen Radarsensor umfassen,
- Verfahren, bei dem die folgenden Schritte durchgeführt werden:
- Emittieren eines Radarsignals mindestens in dem Bereich,
- Empfangen mindestens einer Reflexion des Radarsignals von einem in dem Bereich befindlichen Objekt, um Daten des mindestens einen Objekts zu erhalten, und
- Verarbeiten der Daten, um das Vorhandensein von Wasser oder Nahrung in dem Bereich zu bestimmen,
- Verfahren, bei dem der Nasenring (10) einen Wassererkennungssensor (14, 15) umfasst, der in dem Teil dieses Rings angeordnet ist, der sich außerhalb der Nasenlöcher des Tieres befindet, um mit dem Sensor das Eintauchen des Ringteils in Wasser oder das Vorhandensein von Wasser über einem Schwellenwert im Bereich der Spitze des Mauls dieses Tieres zu detektieren, um eine Nahrungs- oder Wasseraufnahme dieses Rindes zu identifizieren.

2. Verfahren nach Anspruch 1, **dadurch gekennzeichnet, dass** eine Sendeantenne, die zum Emittieren eines Ultrabreitbandradarsignals konfiguriert ist, ein Radarsignal in den Bereich sendet.

3. Verfahren nach Anspruch 2, **dadurch gekennzeichnet, dass** das Radarsignal in Form von kohärenten Impulsen emittiert wird.

4. Verfahren nach Anspruch 1, **dadurch gekennzeichnet, dass** eine oder mehrere Messungen durchgeführt werden, ausgewählt aus der Gruppe bestehend aus einer Messung des Umgebungsdrucks, der auf den Teil des Rings wirkt, einer Messung des Feuchtigkeitsanteils in der Nähe des Teils des Rings, einer Messung der elektrischen Leitfähigkeit zum Detektieren einer Änderung der Leitfähigkeit zwischen zwei voneinander beabstandeten Elektroden, einer Messung des Fassungsvermögens des Raums, der zwei Elektroden trennt, um eine Änderung des Fassungsvermögens dieses Raums in Verbindung mit dem Vorhandensein von Wasser zu detektieren, und einer Messung für die optische Detektion von Wasser.

5. Verfahren nach Anspruch 4, **dadurch gekennzeichnet, dass** der Schwellenwert definiert ist, um Messungen, die mit dem natürlichen physiologischen Zustand des Tieres zusammenhängen, wie der natürlichen Feuchtigkeit der Spitze des Mauls des Tieres, und/oder mögliche Fehlmessungen, die mit den das Tier umgebenden atmosphärischen Bedingungen, wie Regen oder Nebel, zusammenhängen, zu eliminieren.

6. Verfahren nach einem der Ansprüche 1 bis 5,
**dadurch gekennzeichnet, dass** ferner die Position des Tieres in der Nähe einer Tränke und/oder eines Futtertrogs detektiert wird.

7. Verfahren nach einem der Ansprüche 1 bis 6,
**dadurch gekennzeichnet, dass** eine Bewegung des Kopfes des Tieres detektiert wird.

8. Verfahren nach Anspruch 6 und 7, **dadurch gekennzeichnet, dass** die Informationen, die mit der Anwesenheit des Tieres in der Nähe einer Tränke und/oder eines Futtertrogs zusammenhängen, sowie ein Absenken des Kopfes des Tieres verknüpft werden, um die Messung oder die Messungen mit dem Radarsensor und/oder dem mindestens einen Wassererkennungssensor (14, 15) auszulösen.

9. Verfahren nach einem der Ansprüche 1 bis 5 und 6 und/oder 7,
**dadurch gekennzeichnet, dass** der Radarsensor und/oder der mindestens eine Wassererkennungssensor (14, 15) einen Standby-Modus mit niedrigem Energieverbrauch aufweist, wobei jeder Sensor in diesen Modus versetzt wird, wenn ersichtlich ist, dass das Tier ruht oder sich nicht in der Nähe einer Tränke und/oder eines Futtertrogs befindet oder auch dass der Kopf dieses Tieres nicht zu dem Boden gesenkt ist.

10. Verfahren nach einem der vorstehenden Ansprüche,
**dadurch gekennzeichnet, dass** die Bewegungen des Mauls des Tieres detektiert werden, um ein Kauen von Futter durch dieses zu identifizieren.

11. Verfahren nach einem der vorstehenden Ansprüche,
**dadurch gekennzeichnet, dass** die von dem Radarsensor und/oder dem mindestens einen Wassererkennungssensor (14, 15) gelieferten Messungen über die Zeit erfasst werden, um eine Wasseraufnahme- oder Nahrungsaufnahmedauer dieses Tieres zu bestimmen.

12. Verfahren nach einem der vorstehenden Ansprüche,
**dadurch gekennzeichnet, dass** die Messungen durch eine Zentraleinheit, wie einen Mikroprozessor, die von dem Tier getragen wird, verarbeitet werden oder durch ein drahtloses Kommunikationsprotokoll an eine entfernte Zentraleinheit gesendet werden.

13. Verfahren nach einem der vorstehenden Ansprüche,
**dadurch gekennzeichnet, dass** mit dem Nasenring (10) ferner Wirkstoffe, wie Medikamente, Vitamine, abgegeben werden.

14. Vorrichtung für die Überwachung der Nahrungs- und Wasseraufnahme eines Rindes, wie einer Kuh, die geeignet ist, von einem Rind getragen zu werden, und einen Nasenring (10) umfasst, umfassend:
- einen Radarsensor, umfassend mindestens:
- eine Sendeantenne, die an einer ersten Position angeordnet und konfiguriert ist, um ein Radarsignal in einen Bereich außerhalb des Körpers des Tieres zu emittieren,
- eine Empfangsantenne, die an einer zweiten Position angeordnet ist, die sich von der ersten Position unterscheidet und davon beabstandet ist, wobei die Empfangsantenne konfiguriert ist, um die von einem oder mehreren in dem Bereich platzierten Objekten reflektierten Signale zu empfangen, und
- einen Wassererkennungssensor (14, 15), der in dem Teil dieses Rings angeordnet ist, der sich außerhalb der Nasenlöcher des Tieres befindet, wenn dieses die Überwachungsvorrichtung trägt, wobei dieser Wassererkennungssensor (14, 15) konfiguriert ist, um das Eintauchen des Ringteils in das Wasser oder das Vorhandensein von Wasser über einem Schwellenwert in dem Bereich der Spitze des Mauls dieses Tieres zu detektieren, um eine Nahrungs- oder Wasseraufnahme dieses Rindes zu identifizieren, und
- eine Verarbeitungseinheit, um eine Nahrungs- oder Wasseraufnahme durch dieses Rind anhand der von dem Radarsensor und/oder dem mindestens einen Wassererkennungssensor (14, 15) vorgenommenen Messungen zu identifizieren.

15. Überwachungsvorrichtung nach Anspruch 14,
**dadurch gekennzeichnet, dass** die Sendeantenne konfiguriert ist, um ein Ultrabreitbandradarsignal zu emittieren.

16. Überwachungsvorrichtung nach Anspruch 14,
**dadurch gekennzeichnet, dass** der Nasenring (10) konfiguriert ist, um Wirkstoffe, wie Medikamente, Vitamine, Hormone, abzugeben.

17. Vorrichtung nach einem der Ansprüche 14 bis 16,
**dadurch gekennzeichnet, dass** der oder die Sensoren für die Detektion des Vorhandenseins von Wasser ausgewählt sind aus der Gruppe bestehend aus einem Druckmesser, einem Feuchtigkeitssensor, einer Sonde zum Messen der elektrischen Leitfähigkeit, um eine Änderung der Leitfähigkeit zwischen zwei voneinander beabstandeten Elektroden zu detektieren, einer Sonde zum Messen des Fassungsvermögens des Raums, der zwei Elektroden trennt, um eine Änderung des Fassungsvermögens dieses Raums zu detektieren, und einem optischen Sensor, um das Vorhandensein von Wasser auf oder in dem Ringteil zu detektieren.

18. Vorrichtung nach einem der vorstehenden Ansprüche,
**dadurch gekennzeichnet, dass** sie ferner einen Beschleunigungsmesser (16) und/oder ein Gyroskop und/oder eine Lokalisierungsvorrichtung (17) dieser Überwachungsvorrichtung in der Nähe einer Tränke oder eines Futtertrogs umfasst.

## Claims

1. Method for monitoring the feeding and water consumption of a bovine, such as a cow, using a nose ring (10) carried by said bovine, said nose ring (10) having at least two sensors (14, 15), in order to detect the presence of water and/or food in a zone located at the animal's muzzle and external to the animal's body, to identify the intake of food or water by the bovine, said at least two sensors comprising a radar sensor,
- in which method the following steps are carried out:
- emitting a radar signal at least in said zone,
- receiving at least one reflection of the radar signal from an object located in said zone to obtain data from said at least one object, and
- processing said data to determine the presence of water or food in said zone,
- in which method said nose ring (10) has a water detection sensor (14, 15) placed in the portion of the ring located outside the animal's nostrils, to detect using said sensor the immersion of said ring portion in water or the presence of water above a threshold value at the end of the animal's muzzle to identify the intake of food or water of the bovine.

2. Method according to claim 1, **characterized in that** an emitting antenna configured to emit an ultra-wideband radar signal emits a radar signal in said zone.

3. Method according to claim 2, **characterized in that** said radar signal is emitted in the form of coherent pulses.

4. Method according to claim 1, **characterized in that** one or more measurements are carried out, the measurements being selected from the group comprising a measurement of the ambient pressure acting on said portion of the ring, a measurement of the moisture level in the vicinity of said portion of the ring, an electrical conductivity measurement to detect a variation in the conductivity between two mutually spaced electrodes, a capacitance measurement of the space separating two electrodes to detect a variation in the capacitance of the space related to the presence of water, and an optical water detection measurement.

5. Method according to claim 4, **characterized in that** said threshold value is defined to eliminate measurements related to the natural physiological state of the animal such as the natural moisture of the end of the animal's muzzle and/or possible false measurements related to the atmospheric conditions surrounding the animal such as rain or fog.

6. Method according to any of claims 1 to 5, **characterized in that** the location of the animal in the vicinity of a drinking and/or feeding trough is also detected.

7. Method according to any of claims 1 to 6, **characterized in that** a movement of the animal's head is detected.

8. Method according to claims 6 and 7, **characterized in that** the information related to the presence of the animal in the vicinity of a drinking and/or feeding trough is combined with a lowering of the animal's head to trigger the measurement or measurements using said radar sensor and/or said at least one water detection sensor (14, 15).

9. Method according to any of claims 1 to 5 and 6 and/or 7,
**characterized in that** said radar sensor and/or said at least one water detection sensor (14, 15) have a low-energy consumption standby mode, each sensor being placed in this mode when it appears that the animal is at rest or is not located in the vicinity of a drinking and/or feeding trough or that the head of the animal is not lowered toward the ground.

10. Method according to any of the preceding claims, **characterized in that** the movements of the animal's muzzle are detected to identify food chewing by said animal.

11. Method according to any of the preceding claims, **characterized in that** the measurements provided by said radar sensor and/or said at least one water detection sensor (14, 15) are acquired over time to determine a duration of water consumption or feeding of the animal.

12. Method according to any of the preceding claims, **characterized in that** said measurements are processed by a central unit, such as a microprocessor, worn by the animal or are sent by a wireless communication protocol to a remote central unit.

13. Method according to any of the preceding claims, **characterized in that** active compounds such as drugs or vitamins are also delivered using said nose ring (10).

14. Device for monitoring the feeding and water consumption of a bovine such as a cow, which device is suitable for being carried by a bovine and comprises a nose ring (10), which has:
- a radar sensor comprising at least:
- an emitting antenna arranged in a first position and configured to emit a radar signal in a zone external to the animal's body,
- a receiving antenna arranged in a second position distinct and spaced from the first position, said receiving antenna being configured to receive the signals reflected by one or more objects placed in the zone, and
- a water detection sensor (14, 15) arranged in the portion of the ring located outside the animal's nostrils when said animal is wearing said monitoring device, the water detection sensor (14, 15) being configured to detect the immersion of said ring portion in water or the presence of water above a threshold value at the end of said animal's muzzle to identify the intake of food or water of the bovine, and
- a processing unit to identify from the measurements taken by said radar sensor and/or said at least one water detection sensor (14, 15) the intake of food or water by the bovine.

15. Monitoring device according to claim 14, **characterized in that** said emitting antenna is configured to emit an ultra-wideband radar signal.

16. Monitoring device according to claim 14, **characterized in that** said nose ring (10) is configured to deliver active compounds such as drugs, vitamins, and hormones.

17. Device according to any of claims 14 to 16, **characterized in that** the water presence detection sensor or sensors are selected from the group comprising a pressure gage, a moisture sensor, an electrical conductivity measurement probe for detecting a variation in the conductivity between two mutually spaced electrodes, a probe for measuring the capacitance of the space separating two electrodes to detect a variation in the capacitance of the space, and an optical sensor for detecting the presence of water on or in said ring portion.

18. Device according to any of the preceding claims, **characterized in that** it also has an accelerometer (16) and/or a gyroscope and/or a device (17) for locating the monitoring device in the vicinity of a drinking or feeding trough.
